# FASCICULE DE BREVET EUROPEEN

(11) **EP 1 695 564 B1**
(45) Date de publication et mention de la délivrance du brevet: **08.09.2010**
(21) Numéro de dépôt: 04816518.7
(22) Date de dépôt: 08.12.2004
(51) Int. Cl.: H04Q 1/14, H01R 13/703

(54) **MODULE ET REGLETTE DE RACCORDEMENT**
MODUL UND VERBINDER
MODULE AND CONNECTOR

(30) Priorité: 09.12.2003 FR 0351007
(43) Date de publication de la demande: 30.08.2006
(73) Titulaire: Nexans, 75008 Paris (FR)
(72) Inventeur: LECOMTE, Didier, F-84300 Cavaillon (FR); PREL, Patrick, F-95540 Mery Sur Oise (FR)
(74) Mandataire: Feray, Valérie
(86) Numéro de dépôt international: PCT/FR2004/050664
(87) Numéro de publication internationale: WO 2005/057947

(56) Documents cités:
- WO-A-01/80574
- WO-A-03/065699

## Description

La présente invention concerne un module de raccordement utilisé pour les transmissions téléphoniques, plus particulièrement adapté à des transmissions sur des lignes d'abonné numérique à débit asymétrique ou ADSL (asymmetric digital subscriber line en anglais). La présente invention concerne également une réglette de raccordement pour la constitution de répartiteurs, incorporant de tels modules et destinée notamment à réaliser la connexion entre des paires de cuivre d'un câble multipaires et des jarretières.

De façon générale, la technologie ADSL permet d'utiliser la paire de cuivre téléphonique classique simultanément pour le téléphone et une connexion Internet haut débit. Elle tire partie pour cela des fréquences de la ligne téléphonique jusqu'à présent restées inutilisées (fréquences supérieures à 4000 Hz) ; ainsi, le téléphone utilise les fréquences basses et le haut débit les fréquences hautés, grâce à un modem ADSL installé chez l'utilisateur : la technologie ADSL permet donc une connexion Internet permanente et indépendante de l'utilisation faite du téléphone.

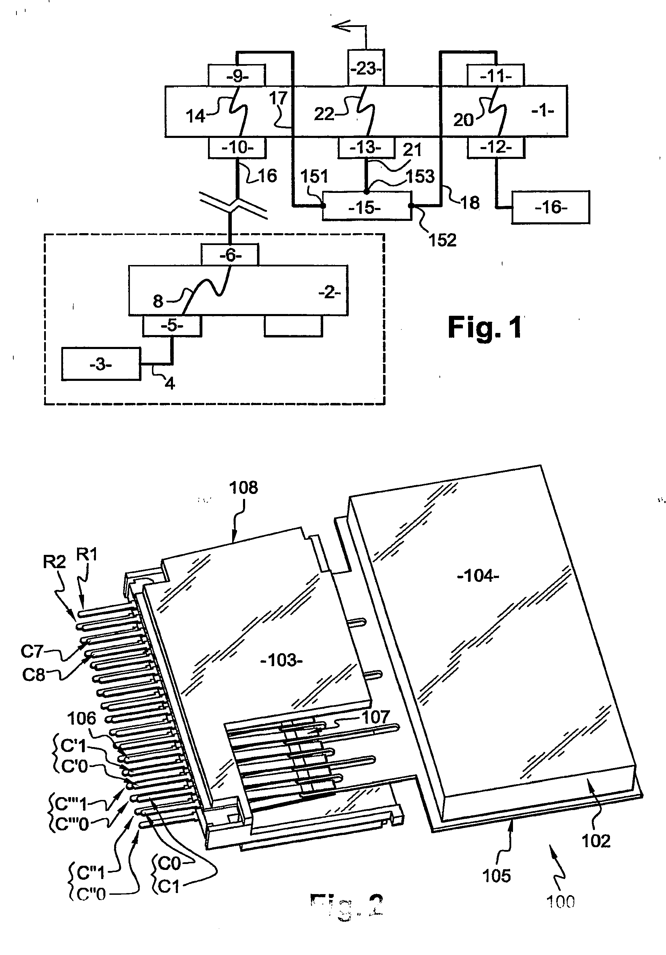

Pour fournir une connexion ADSL à ses clients, une des solutions dont dispose un opérateur alternatif est d'avoir recours au dégroupage partiel de la ligne. Dans ce cas, au niveau du répartiteur de l'opérateur historique France Télécom, un filtre branché sur la ligne concernée permet d'orienter les fréquences basses, sur lesquelles passent la voix, vers le réseau téléphonique de France Télécom, et les fréquences hautes, sur lesquelles passent les données, vers le réseau de l'opérateur fournissant la connexion à Internet. Une telle architecture est représentée en figure 1.

Le répartiteur 1 désigne le répartiteur de l'opérateur historique et le répartiteur 2 désigne le répartiteur d'un opérateur alternatif. Le répartiteur 1 comporte cinq réglettes de raccordement 9 à 13 et un connecteur 23 et le répartiteur 2 comporte deux réglettes 5 et 6. Chacune de ces réglettes comprend une pluralité de modules de raccordement non représentés, habituellement 16 modules et est généralement affectée à un câble de 128 paires de cuivre. L'équipement 3 DSLAM ( Digital Subscriber Line Access Multiplexer) de l'opérateur alternatif réunit plusieurs lignes DSL (Digital Subscriber Line) pour les connecter à la réglette 5 du répartiteur 2 de l'opérateur alternatif via un câble 4. Des données numériques du type Internet proviennent et arrivent du DSLAM 3. Une jarretière 8 permet de relier la réglette 5 à la réglette 6. Un câble 16 (la coupure intermédiaire désignant la frontière entre l'opérateur alternatif et l'opérateur historique) est rellé à la réglette 10 du répartiteur 1 de l'opérateur historique. Une jarretière 14 relie la réglette 10 à la réglette 9. La réglette 9 est connectée à une première entrée 151 d'une baie de filtrage 15 via un câble 17. Plus précisément, la baie de filtrage 15 est une baie comportant différents filtres ADSL non représentés.

De manière identique aux données numériques provenant et arrivant du DSLAM, les données vocales numérisées provenant et arrivant de l'URA (Unité de Raccordement d'Abonné) 16 vont passer par la baie de filtrage 15 via une deuxième entrée 152. L'URA 16 est ainsi connectée à la réglette 12 du répartiteur 1 via un câble 19. La réglette 12 est reliée à la réglette 11 via une jarretière 20 et la réglette 11 est reliée à la deuxième entrée 152 de la baie de filtrage 15 via un câble 18.

La sortie 153 de la baie de filtrage 15 est reliée par un câble 21 à la réglette 13, laquelle est reliée via une jarretière 22 à une connexion 23 vers une paire de cuivre reliée au client final.

La baie de filtrage 15 permet donc d'orienter les fréquences basses, sur lesquelles passent les données vocales, vers et de l'URA 16, et les fréquences hautes, sur lesquelles passent les données numériques du type Internet, vers et du DSLAM 3.

Toutefois, la mise en oeuvre d'une telle solution pose certaines difficultés. En effet, le câblage de la baie de filtrage 15 sur le répartiteur général 1 impose l'utilisation d'une grande longueur de câbles 15, 18, 21 induisant non seulement un surcoût mais également une augmentation du temps de pose et de raccordement.

De plus la baie de filtrage 15 composée pratiquement d'une armoire incorporant différents filtres ADSL est assez encombrante

le document WO 01/80574 décrit un module de raccordement selon le preambule de la revendication 1.

La présente invention vise à fournir un module de raccordement dont l'utilisation dans une réglette permet de diminuer la longueur de câble en s'affranchissant de l'utilisation d'une baie de filtrage.

La présente invention propose à cet effet un module de raccordement selon la revendication comportant un boîtier, ledit boîtier incluant deux rangées

Grâce à l'invention, l'utilisation d'une baie de filtrage n'est plus nécessaire puisque la fonction de filtrage peut être directement intégrée au répartiteur de l'opérateur historique. Cette suppression de la baie de filtrage permet un gain en câblage et donc une économie et une simplification de l'installation. Le filtre comporte au moins une fonction passe-bas permettant de laisser passer les données vocales téléphoniques tout en éliminant les bruits à plus haute fréquence.

Le module selon l'invention est installé dans une réglette et la connexion entre les réglettes se fait via des jarretières beaucoup plus flexibles à manipuler que des câbles ; de plus, la pose de ces jarretières peut être modulée au gré de la demande.

En outre, comme chacune des deuxièmes parties terminales est normalement en appui élastique contre la deuxième partie terminale en vis à vis, la carte peut être installée ou enlevée du module sans coupure de la conversation téléphonique.

Avantageusement, lesdites première et deuxième paires de contacts sont en vis à vis.

Avantageusement, lesdites premières parties terminales de raccordement à un conducteur forment la partie avant dudit boîtier et ladite carte est enfichable par la partie arrière dudit boîtier entre lesdites deuxièmes parties terminales normalement en appui élastique et en vis à vis.

Le câblage par l'avant sur les premières parties terminales est ainsi particulièrement simple puisque la carte amovible est entichée à l'arrière et n'est donc pas gênante.

Avantageusement, ladite carte amovible réalise au moins une fonction de connexion électrique entre les deuxièmes parties terminales de la paire de contacts suivant ladite première paire sur la même rangée et lesdites deuxièmes parties terminales de la paire de contact en vis à vis de ladite première paire sur l'autre rangée.

La carte permet ainsi de relier deux paires recevant chacune un type de données (la voix téléphonique et les données numériques ADSL par exemple) vers une même paire leurs faisant face.

Avantageusement, ladite carte amovible réalise une fonction de filtre passe haut entre les deuxièmes parties terminales de la paire de contacts suivant ladite première paire sur la même rangée et lesdites deuxièmes parties terminales de la paire de contact en vis à vis de ladite première paire sur l'autre rangée.

Ce filtre passe-haut permet de filtrer les bruits basse fréquence et de ne laisser passer que les données numériques ADSL.

Selon un mode de réalisation particulièrement avantageux:
- la première rangée comporte 2n paires contacts formant n groupes successifs de 2 paires de contacts, C₂ᵢ et C₂ᵢ₊₁ d'une part et C'₂ᵢ et C'₂ᵢ₊₁ d'autre part, avec i variant de 0 à n-1, n étant un entier supérieur ou égal à 1,
- la deuxième rangée comporte au moins 2n paires de contact formant n groupes successifs de 2 paires de contacts, C"₂ᵢ et C"₂ᵢ₊₁ d'une part et C"'₂ᵢ et C"'₂ᵢ₊₁ d'autre part, les contacts C"₂ᵢ et C"₂ᵢ₊₁ étant en vis à vis des contacts C₂ᵢ et C₂ᵢ₊₁ et les contacts C"'₂ᵢ et C"'₂ᵢ₊₁ étant en vis à vis des contacts C'₂ᵢ et C'₂ᵢ₋₁
- ladite carte comporte une première face incluant 2n paires d'éléments de connexion formant n groupes successifs de 2 paires d'éléments de connexion, E₂ᵢ et E₂ᵢ₊₁ d'une part et E'₂ᵢ et E'₂ᵢ₊₁ d'autre part, avec i variant de 0 à n-1, et une deuxième face incluant n paires d'éléments de connexion E"₂ᵢ et E"₂ᵢ₊₁, de sorte que lorsque ladite carte écarte lesdites deuxièmes parties terminales normalement en contact en vis à vis :
- les éléments de connexion E₂ᵢ et E₂ᵢ₊₁ viennent respectivement en contact avec les deuxièmes parties terminales des contacts C₂ᵢ et C₂ᵢ₊₁ et les éléments de connexion E'₂ᵢ et E'₂ᵢ₊₁ viennent respectivement en contact avec les deuxièmes parties terminales des contacts C'₂ᵢ et C'₂ᵢ₊₁,
- les éléments de connexion E"₂ᵢ et E"₂₁₊₁, viennent respectivement en contact avec les deuxièmes parties terminales des contacts C"₂ᵢ et C"₂ᵢ₊₁,
   lesdits éléments de connexion E₂ᵢ et E₂ᵢ₊₁ étant reliés électriquement aux dits éléments de connexion E"₂ᵢ et E"₂ᵢ₊₁ via un filtre passe bas situé sur ladite carte.

On conçoit ici que la carte amovible peut permettre de connecter plusieurs groupes de deux paires d'une même rangée. Dans un tel cas (n groupes), n fonctions filtres sont évidemment à prévoir sur la carte.

Avantageusement, ladite carte comporte 2n doigts découpés dans ladite carte formant n groupes successifs de 2 paires de doigts, D₂ᵢ et D₂ᵢ₊₁ d'une part et D'₂ᵢ et D'₂ᵢ₊₁ d'autre part, avec i variant de 0 à n-1, lesdits doigts D₂ᵢ et D₂ᵢ₊₁ étant métallisés sur chacune desdites première et deuxième faces de ladite carte de façon à former lesdits éléments de connexion E₂ᵢ et E₂ᵢ₊₁ d'une part et E"₂ᵢ et E"₂ᵢ₊₁ d'autre part et lesdits doigts D'₂ᵢ et D'₂ᵢ₊₁ étant métallisés uniquement sur ladite première face de ladite carte de façon à former lesdits éléments de connexion E'₂ᵢ et E'₂ᵢ₊₁.

De manière avantageuse, lesdits éléments de connexion E'₂ᵢ et E'₂ᵢ₊₁ sont rellés électriquement aux dits éléments de connexion E"₂ᵢ et E"₂₁₊₁.

Avantageusement, ladite liaison électrique est réalisée via un filtre passe haut.

Avantageusement, au moins une paire de contacts est reliée électriquement à la paire de contact en vis à vis via un élément cavalier réalisant une liaison électrique entre les premières parties terminales des contacts en vis à vis.

Selon un mode de réalisation, lesdites premières parties terminales sont adaptées pour recevoir un enroulement de conducteur du type « wrapping ».

Selon un autre mode de réalisation, lesdites premières parties terminales comporte une fente autodénudante.

La présente invention a également pour objet une réglette de raccordement comportant une pluralité de modules de raccordement selon l'invention.

Avantageusement, ladite réglette comporte un support incorporant ladite pluralité de réglettes, ledit support étant monté en rotation autour d'un axe de rotation.

La présente invention a enfin pour objet une réglette de raccordement comportant une plaque de fixation sensiblement rectangulaire incluant une première face sur laquelle sont fixés de manière amovible une pluralité de modules selon l'invention, ledit boîtier de chacun desdits modules comportant sur sa partie arrière des moyens de fixation dudit module sur ladite première face, lesdits modules étant disposés en rangée suivant une première direction, parallèlement les uns par rapport aux autres de sorte que lesdites premières parties terminales de raccordement à un conducteur soient apparentes sur une face, dite face avant, de ladite réglette, la plaque de fixation présentant une pluralité de fentes laissant apparaître lesdites deuxièmes parties terminales de sorte que lesdites cartes sont enfichables par la deuxième face de ladite plaque via lesdites fentes.

Avantageusement, ladite plaque de fixation est montée en rotation autour d'un axe de rotation s'étendant sensiblement le long d'un coté de ladite plaque.

Avantageusement, la réglette selon l'invention comporte un bloc de fixation en forme de demi-paralléléplpède rectangle dont le premier support rectangulaire est destiné à être monté contre un élément de maintien tel qu'un mur et le deuxième support rectangulaire comporte sur son coté longitudinal des éléments de maintien en rotation de ladite plaque.

D'autres caractéristiques et avantages de la présente invention apparaîtront dans la description suivante d'un mode de réalisation de l'invention, donné à titre illustratif et nullement limitatif.

Dans les figures suivantes :
- La figure 1 représente schématiquement une architecture ADSL selon l'état de la technique,
- La figure 2 représente un module de raccordement selon l'invention,
- La figure 3A représente une vue suivant une première face d'une carte amovible utilisée dans le module de la figure 2,
- La figure 3B représente une vue suivant une deuxième face de la carte amovible utilisée dans le module de la figure 2.
- La figure 4A représente une réglette de raccordement selon l'invention dans un état fermée,
- La figure 4B représente une réglette de raccordement selon l'invention dans un état ouvert,
- La figure 5 représente schématiquement une architecture ADSL utilisant une réglette de raccordement selon l'invention.
   La figure 1 a déjà été décrite en relation avec l'état de la technique.
   La figure 2 représente un module de raccordement 100 selon l'invention.

Le module de raccordement 100 comporte :
- un bloc 103, dit bloc à coupure,
- une carte amovible 104, dite carte filtre.

Le bloc à coupure 103 inclut un boîtier 108 dans lequel sont emprisonnés deux rangées R1 (première rangée) et R2 (deuxième rangée) parallèles de contacts en vis à vis d'une rangée à l'autre.

De manière générale, dans toute la suite de la description, chaque contact comporte :
- une première partie terminale 106 pour recevoir un enroulement de conducteur du type « wrapping » (notons qu'il peut également s'agir d'une fourche autodénudante),
- une deuxième partie terminale 107 en forme de queue de liaison arquée pour sa liaison en pression élastique avec la queue de liaison d'un contact analogue en vis à vis.

Le bloc à coupure 103 présente donc une face dite avant par laquelle sont accessibles les premières parties terminales 106 et une face dite arrière par laquelle sont accessibles les deuxièmes parties terminales 107.

La première rangée R1 comporte 2n (ici n=4) paires contacts formant n groupes successifs de 2 paires de contacts, C₂ᵢ et C₂ᵢ₊₁ d'une part et C'₂ᵢ et C'₂ᵢ₊₁ d'autre part, avec i variant de 0 à n-1.

A titre d'exemple, le premier groupe représenté en figure 1 comporte d'une part les contacts C₀ et C₁ et d'autre part les contacts C'₀ et C'₁.

La deuxième rangée R2 comporte 2n paires de contact formant n groupes successifs de 2 paires de contacts, C"₂ᵢ et C"₂ᵢ₊₁ d'une part et C"'₂ᵢ et C"'₂ᵢ₊₁ d'autre part, les contacts C"₂ᵢ et C"₂ᵢ₊₁ étant en vis à vis des contacts C₂ᵢ et C₂ᵢ₊₁ et les contacts C"'₂ᵢ et C"'₂ᵢ₊₁ étant en vis à vis des contacts C'₂ᵢ et C'₂ᵢ₊₁.

A titre d'exemple, le premier groupe représenté en figure 1 comporte d'une part les contacts C"₀ et C"₁ (respectivement en vis à vis de C₀ et C₁) et d'autre part les contacts C"'₀ et C"'₁ (respectivement en vis à vis de C'₀ et C'₁).

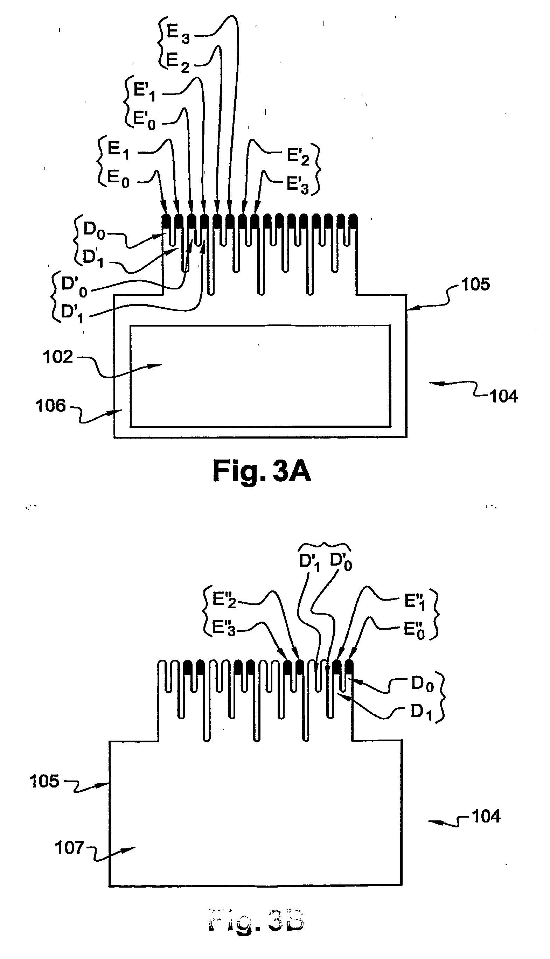

La carte filtre 104 sera mieux comprise au regard des figures 3A et 3B représentants respectivement une vue des deux faces 106 et 107 de la carte 104.

La carte filtre 104 comporte :
- des moyens de filtrage 102 situés sur sa première face 106,
- un support à circuit imprimé 105.

La carte 104 comporte en outre 2n doigts découpés dans la carte formant n groupes successifs de 2 paires de doigts, D₂ᵢ et D₂ᵢ₊₁ d'une part et D'₂ᵢ et D'₂ᵢ₊₁ d'autre part, avec i variant de 0 à n-1.

Les doigts D₂ᵢ et D₂ᵢ₊₁ sont métallisés sur chacune des première et deuxième faces 106 et 107 de la carte 104 de façon à former des éléments de connexion E₂ᵢ et E₂ᵢ₊₁ d'une part (sur la première face 1 106) et E"₂ᵢ et E"₂ᵢ₊₁ d'autre part (sur la deuxième face 107).

Les doigts D'₂ᵢ et D'₂ᵢ₊₁ sont mètallisés uniquement sur la première face 106 de façon à former des éléments de connexion E'₂ᵢ et E'₂ᵢ₊₁.

A titre d'exemple, les doigts D₀ et D₁ d'une part et D'₀ et D'₁ d'autre part sont représentés sur les figures 3A et 3B.

Les doigts D₀ et D₁ sont métallisés sur chacune des faces 106 et 107 alors que les doigts D'₀ et D'₁ sont métallisés uniquement sur la face 106.

Les éléments de connexion E₂ᵢ et E₂ᵢ₊₁ de la face 106 sont reliés électriquement aux éléments de connexion E"₂ᵢ et E"₂ᵢ₊₁ de la face 107 via un filtre passe bas situé dans les moyens de filtrage 102 et réalisés de manière connue. Notons ici que la liaison électrique entre Les éléments de connexion E₂ᵢ et E₂ᵢ₊₁ et les moyens de filtrage 102 a été omise pour des raisons de clarté de la représentation.

Les éléments de connexion E'₂ᵢ et E'₂ᵢ₊₁ de la face 106 sont reliés électriquement aux éléments de connexion E"₂ᵢ et E"₂ᵢ₊₁.de la face 107. Cette liaison électrique peut être réalisée via un filtre passe haut situé dans les moyens de filtrage 102.

Lorsque la carte filtre est introduite par la face arrière du bloc 103, la carte écarte via ses doigts les deuxièmes parties terminales normalement en contact élastique de sorte que :
- les éléments de connexion E₂ᵢ et E₂ᵢ₊₁ viennent respectivement en contact avec les deuxièmes parties terminales des contacts C₂ᵢ et C₂ᵢ₊₁ et les éléments de connexion E'₂ᵢ et E'₂ᵢ₊₁ viennent respectivement en contact avec les deuxièmes parties terminales des contacts C'₂ᵢ et C'₂ᵢ₊₁,
- les éléments de connexion E"₂ᵢ et E"₂ᵢ₊₁,viennent respectivement en contact avec les deuxièmes parties terminales des contacts C"₂ᵢ et C"₂ᵢ₊₁.

Dans le cas d'une connexion ADSL, deux types de données peuvent être reçus : des données téléphoniques utilisant des fréquences basses et des données numériques haut débit à plus haute fréquence.

Au niveau de la réglette, les données téléphoniques sont reçues sur les contacts C₂ᵢ et C₂ᵢ₊₁ et les données numériques haute fréquence sont reçues sur les contacts C'₂ᵢ et C'₂ᵢ₊₁.

A la fois les données téléphoniques et les données numériques sont transmises vers les contacts C"₂ᵢ et C"₂ᵢ₊₁.

Lorsque la carte 104 est insérée dans le bloc 103, les données téléphoniques sont filtrées de façon à éliminer les bruits à plus haute fréquence.

De même, en présence de filtres passe haut dans les moyens de filtrage 102, les données numériques haute fréquence sont filtrées de façon à éliminer les bruites à basse fréquence.

En l'absence de ces filtres passe haut, les données numériques sont transmises sans filtrage vers les contacts C"₂ᵢ et C"₂ᵢ₊₁.

Notons que lorsque la carte filtre 104 est retirée (suppression de la connexion ADSL dans ce cas), une conversation téléphonique n'est pas coupée car les contacts en vis à vis retrouvent leur position initiale en contact élastique.

Notons en outre que nous avons considéré dans notre exemple les contacts de données téléphoniques C₂ᵢ et C₂ᵢ₊₁ en vis à vis de des contacts de ligne C"₂ᵢ et C"₂ᵢ₊₁ mais que nous aurions tout aussi bien pu considérer les données haute fréquence sur les contacts C₂ᵢ et C₂ᵢ₊₁. Dans un tel cas, la fonction de filtrage passe bas devra être réalisée par la carte 104 entre les contacts C'₂ᵢ et C'₂ᵢ₊₁ et C"₂ᵢ et C"₂ᵢ₊₁.

On peut également envisager d'utiliser un cavalier sur la face avant reliant les premières parties terminales d'une paire de contact aux premières parties terminales d'une paire de contacts en vis à vis de façon à ce que lesdites paires de contacts soient reliées électriquement via le cavalier et indépendamment de la carte filtre 104. Ce type de cavalier permet différentes combinaisons sur les métallisations de la carte filtre : on peut notamment réaliser la transmission des données haute fréquence d'une paire de contacts à la paire de contact en vis à vis via le cavalier et couper la connexion ADSL en enlevant simplement le cavalier. Une telle solution permet de recevoir les données sur une rangée ou sur l'autre.

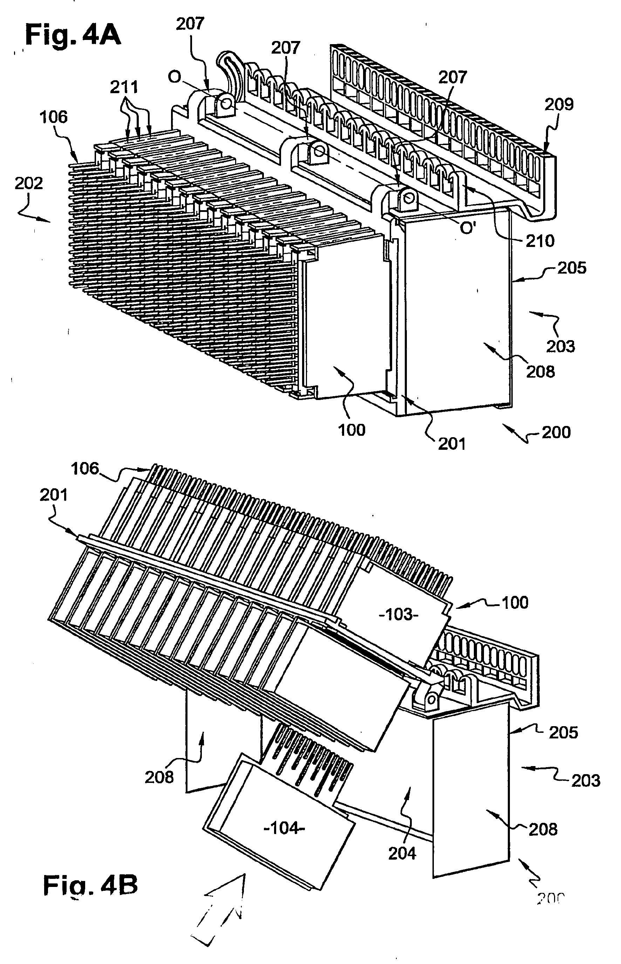

Les figures 4A et 4B représentent une réglette 200 selon l'invention respectivement dans un état fermé et dans un état ouvert.

La réglette 200 comporte une plaque de fixation 201 incluant une première face sur laquelle sont fixés de manière amovible 16 modules de raccordement 100 tels que représenté en figure 2 et disposés parallèlement les uns aux autres de sorte que les premières parties terminales 106 de raccordement à un conducteur des modules 100 soient apparentes sur la face avant 202 de la réglette 200.

La plaque de fixation 201 présentent 16 fentes non visibles sur la figure laissant apparaître les deuxièmes parties terminales, également non visibles sur la figure, de sorte que les cartes filtres 104 sont enfichées dans le bloc à coupure 103 via chacune des 16 fentes. En d'autres termes, la plaque de fixation 201 se trouve intercalée entre la partie bloc de coupure 103 et la partie carte filtre 104 de chacun des modules de raccordement 100.

La réglette 200 comporte en outre un bloc de fixation en forme de demi-parallélépipède rectangle incluant :
- un premier support rectangulaire longitudinal 204 fixé par son coté 205 contre un élément de maintien tel qu'un mur via des fixations non représentées,
- un deuxième support rectangulaire longitudinal 206 perpendiculaire au support 204 et comportant des éléments de fixation 207 de la plaque 201 sur le deuxième support 204,
- des troisième et quatrième support latéraux 208.

Les éléments de fixation 207 sont tels que la plaque 201 est montée en rotation autour d'un axe horizontal OO'

Ainsi, lorsqu'une carte filtre 104 doit être ajoutée ou changée, il suffit de faire basculer (en rotation autour de OO') la plaque 201 vers le haut comme cela est représenté sur la figure 4B et de mettre en place la carte filtre en l'enfichant entre les deuxièmes parties terminales du bloc de raccordement correspondant. La réglette 200 est ensuite refermée et est en état de fonctionnement.

II est à noter qu'une telle architecture de réglette permet de maintenir la réglette fixée contre le mur même lorsque l'on change les cartes filtres ; elle permet d'autre part de réaliser le câblage par la face avant de la réglette sans que les cartes filtres ne soient gênantes puisque ces dernières sont insérées par l'arrière (secondes parties terminales) des modules de raccordement.

Notons également que la réglette 200 peut comprendre différents types de moyens de guidage 209 et 210 pour le passage des câbles de données et/ou de jarretières vers les entrées de connexion 211 des modules de raccordement 100.

L'axe de rotation horizontal OO' est placée sensiblement perpendiculairement et à proximité du trajet des câbles provenant des ces moyens de guidage afin de minimiser, voir annuler, les efforts sur les fils lors de la rotation.

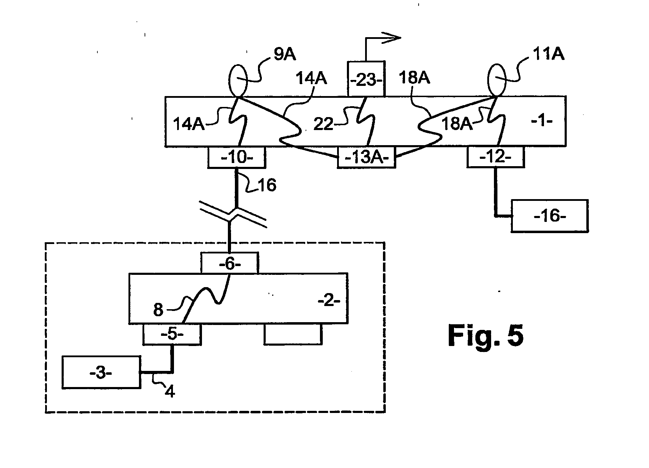

La figure 5 représente schématiquement une architecture ADSL utilisant une réglette de raccordement 13A selon l'invention telle que la réglette 200 représentée sur les figures 4A et 4B.

Cette architecture est identique à l'architecture ADSL représentée en figure 1 à la différence que :
- la réglette de raccordement 13 et la baie de filtrage 15 représentée en figure 1 sont remplacées par la réglette de raccordement 13A conforme à l'invention,
- les réglettes 9 et 11 du coté vertical du répartiteur 1 de la figure 1 sont remplacées par des anneaux 9A et 11A.

Une telle architecture permet une réduction du coût total puisque les câbles 17 et 18 de la figure 1 sont remplacés par des jarretières 14A et 18A. Cette réduction de coût se manifeste non seulement au niveau de la longueur de câble gagnée mais également au niveau du temps de pose et de raccordement du câble:

En outre, les jarretières 14A et 18A passant respectivement par les anneaux 9A et 11A et remplaçant les câbles 17 et 18 permettent une pose modulable au gré de la demande.

Enfin, une telle architecture permet do réduire l'encombrement dans la mesure où on supprime deux réglettes de raccordement coté vertical du répartiteur ainsi qu'une baie de filtre ADSL.

Bien entendu, l'invention n'est pas limitée au mode de réalisation qui vient d'être décrit.

Notamment, la carte filtre a été décrite comme ayant exactement le même nombre de connexion que le module de raccordement ; ainsi, une seule carte correspond à un seul bloc de coupure. Toutefois, on peut également envisager un module de raccordement avec plusieurs cartes filtres insérées par l'arrière et réalisant les différentes fonctions de filtrage sur entre les contacts du module.

De même, le module et la réglette selon l'invention ont été plus particulièrement décrits dans le cas d'une connexion ADSL mais on peut également concevoir qu'ils servent à l'échange d'autres types de données que des données téléphoniques et des données à plus haute fréquence.

## Revendications

1. Module (100) de raccordement comportant un boîtier (108), ledit boîtier (108) incluant deux rangées parallèles (R1, R2) de contacts en vis à vis d'une rangée à l'autre, ledit module (100) comportant une carte amovible (104) réalisant une fonction de connexion électrique et de filtrage du type passe-bas des signaux transmis par des connecteurs de sortie, ladite carte amovible (104) comportant des éléments de connexion sur chacune des ses faces, lesdits éléments de connexion venant réaliser la connexion avec lesdits connecteurs de sortie, ledit module étant **caractérisé en ce que** ledit boîtier (108) contient exclusivement lesdits contacts et **en ce que** chacun desdits contacts comporte une première partie terminale (106) de raccordement à un conducteur, disposée sur un côté dudit boîtier, et une deuxième partie terminale (107) opposée, disposée sur un côté opposé dudit boîtier et formant lesdits connecteurs de sortie, deux contacts successifs d'une même rangée définissant une paire de contacts, chacune desdites deuxièmes parties terminales (107) étant normalement en appui élastique contre la deuxième partie terminale (107) en vis à vis, lesdits éléments de connexion de ladite carte amovible venant réaliser la connexion entre les deuxièmes parties terminales en vis à vis d'une rangée à l'autre en écartant les deuxièmes parties terminales normalement en contact.

2. Module (100) de raccordement selon la revendication 1 **caractérisé en ce que** lesdites première et deuxième paires de contacts sont en vis à vis.

3. Module (100) de raccordement selon la revendication 1 ou 2 **caractérisée en ce que** lesdites premières parties terminales de raccordement à un conducteur forment la partie avant dudit boîtier (108) et **en ce que** ladite carte est enfichable par la partie arrière dudit boîtier (108) entre lesdites deuxièmes parties terminales normalement en appui élastique et en vis à vis.

4. Module (100) de raccordement selon l'une des revendications 2 ou 3 **caractérisé en ce que** ladite carte amovible (104) réalise au moins une fonction de connexion électrique entre les deuxièmes parties terminales de la paire de contacts suivant ladite première paire sur la même rangée et lesdites deuxièmes parties terminales de la paire de contact en vis à vis de ladite première paire sur l'autre rangée.

5. Module (100) de raccordement selon la revendication précédente **caractérisé en ce que** ladite carte amovible réalise une fonction de filtre passe haut entre les deuxièmes parties terminales de la paire de contacts suivant ladite première paire sur la même rangée et lesdites deuxièmes parties terminales de la paire de contact en vis à vis de ladite première paire sur l'autre rangée.

6. Module (100) de raccordement selon l'une des revendications précédentes **caractérisé en ce que :**
- la première rangée comporte 2n paires contacts formant n groupes successifs de 2 paires de contacts, C₂ᵢ et C₂ᵢ₊₁ d'une part et C'₂ᵢ et C'₂ᵢ₊₁ d'autre part, avec i variant de 0 à n-1, n étant un entier supérieur ou égal à 1,
- la deuxième rangée comporte au moins 2n paires de contact formant n groupes successifs de 2 paires de contacts, C"₂ᵢ et C"₂ᵢ₊₁ d'une part et C"'₂ᵢ et C"'₂ᵢ₊₁ d'autre part, les contacts C"₂ᵢ et C"₂ᵢ₊₁ étant en vis à vis des contacts C₂ᵢ et C₂ᵢ₊₁ et les contacts C"'₂ᵢ et C"'₂ᵢ₊₁ étant en vis à vis des contacts C'₂ᵢ et C'₂ᵢ₊₁
- ladite carte comporte une première face incluant 2n paires d'éléments de connexion formant n groupes successifs de 2 paires d'éléments de connexion, E₂ᵢ et E₂ᵢ₊₁ d'une part et E'₂ᵢ et E'₂ᵢ₊₁ d'autre part, avec i variant de 0 à n-1, et une deuxième face incluant n paires d'éléments de connexion E"₂ᵢ et E"₂ᵢ₊₁, de sorte que lorsque ladite carte. écarte lesdites deuxièmes parties terminales normalement en contact en vis à vis :
- les éléments de connexion E₂ᵢ et E₂ᵢ₊₁ viennent respectivement en contact avec les deuxièmes parties terminales des contacts C₂ᵢ et C₂ᵢ₊₁ et les éléments de connexion E'₂ᵢ et E'₂ᵢ₊₁ viennent respectivement en contact avec les deuxièmes parties terminales des contacts C'₂ᵢ et C'₂ᵢ₊₁,
- les éléments de connexion E"₂ᵢ et E"₂ᵢ₊₁, viennent respectivement en contact avec les deuxièmes parties terminales des contacts C"₂ᵢ et C"₂ᵢ₊₁,
lesdits éléments de connexion E₂ᵢ et E₂ᵢ₊₁ étant reliés électriquement aux dits éléments de connexion E"₂ᵢ et E"₂ᵢ₊₁ via un filtre passe bas situé sur ladite carte.

7. Module (100) de raccordement selon la revendication précédente **caractérisé en ce que** ladite carte comporte 2n doigts découpés dans ladite carte formant n groupes successifs de 2 paires de doigts, D₂ᵢ et D₂ᵢ₊₁ d'une part et D'₂ᵢ et D'₂ᵢ₊₁ d'autre part, avec i variant de 0 à n-1, lesdits doigts D₂ᵢ et D₂ᵢ₊₁ étant métallisés sur chacune desdites première et deuxième faces de ladite carte de façon à former lesdits éléments de connexion E₂ᵢ et E₂ᵢ₊₁ d'une part et E"₂ᵢ et E"₂ᵢ₊₁ d'autre part et lesdits doigts D'₂ᵢ et D'₂ᵢ₊₁ étant métallisés uniquement sur ladite première face de ladite carte de façon à former lesdits éléments de connexion E'₂ᵢ et E'₂ᵢ₊₁.

8. Module (100) de raccordement selon l'une des revendications 6 ou 7 **caractérisé en ce que** lesdits éléments de connexion E'₂ᵢ et E'₂ᵢ₊₁ sont reliés électriquement aux dits éléments de connexion E"₂ᵢ et E"₂ᵢ₊₁.

9. Module (100) de raccordement selon la revendication précédente **caractérisé en ce que** ladite liaison électrique est réalisée via un filtre passe haut.

10. Module (100) de raccordement selon l'une des revendications précédentes **caractérisé en ce qu'**au moins une paire de contacts est reliée électriquement à la paire de contact en vis à vis via un élément cavalier réalisant une liaison électrique entre les premières parties terminales des contacts en vis à vis.

11. Module (100) de raccordement selon l'une des revendications précédentes **caractérisé en ce que** lesdites premières parties terminales sont adaptées pour recevoir un enroulement de conducteur.

12. Module de raccordement selon l'une des revendications 1 à 10 **caractérisé en ce que** lesdites premières parties terminales comporte une fente autodénudante.

13. Réglette de raccordement comportant une pluralité de modules de raccordement selon l'une des revendications 1 à 12.

14. Réglette de raccordement selon la revendication précédente **caractérisée en ce qu'**elle comporte un support incorporant ladite pluralité de réglettes, ledit support étant monté en rotation autour d'un axe de rotation.

15. Réglette (200) de raccordement comportant une plaque (201) de fixation sensiblement rectangulaire incluant une première face sur laquelle sont fixés de manière amovible une pluralité de modules (100) de raccordement selon la revendication 3 à 12, ledit boîtier de chacun desdits modules comportant sur sa partie arrière des moyens de fixation dudit module sur ladite première face, lesdits modules étant disposés en rangée suivant une première direction, parallèlement les uns par rapport aux autres de sorte que lesdites premières parties terminales de raccordement à un conducteur soient apparentes sur une face (202), dite face avant, de ladite réglette, la plaque de fixation présentant une pluralité de fentes laissant apparaître lesdites deuxièmes parties terminales de sorte que lesdites cartes (104) sont enfichables par la deuxième face de ladite plaque via lesdites fentes.

16. Réglette (200) de raccordement selon la revendication précédente **caractérisée en ce que** ladite plaque (201) de fixation est montée en rotation autour d'un axe de rotation (OO') s'étendant sensiblement le long d'un coté de ladite plaque.

17. Réglette (200) de raccordement selon la revendication 16 **caractérisée en ce qu'**elle comporte un bloc de fixation en forme de demi-parallélépipède rectangle dont le premier support rectangulaire (204) est destiné à être monté contre un élément de maintien tel qu'un mur et le deuxième support rectangulaire (206) comporte sur son coté longitudinal des éléments de maintien (207) en rotation de ladite plaque (201).

## Claims

1. A connector module (100) comprising a case (108), said case (108) including two parallel rows (R1, R2) of contacts facing each other from one row to another, said module (100) comprising a removable card (104) fulfilling a function of electrically connecting and low-pass type filtering signals transmitted by output connectors, said removable card (104) comprising connecting elements on each of the faces thereof, said connecting elements establishing the connection with said output connectors, said module being **characterized in that** said case (108) exclusively contains said contacts, and **in that** each of said contacts comprises a first terminal part (106) for connecting to a conductor, arranged on one side of said case, and a second opposite terminal part (107), arranged on an opposite side of said case and forming said output connectors, two successive contacts of the same row defining one pair of contacts, each of said second terminal parts (107) being normally elastically supported at the opposite second terminal part (107), said connecting elements of said removable card establishing the connection between the second terminal parts facing each other from one row to another by separating the normally contacting second terminal parts.

2. The connector module (100) according to claim 1, **characterized in that** said first and second pairs of contacts are facing each other.

3. The connector module (100) according to claim 1 or 2, **characterized in that** said first terminal parts for connecting to a conductor form the front part of said case (108), and **in that** said card can be plugged in by the rear part of said case (108) between said second terminal parts normally elastically supported and facing each other.

4. The connector module (100) according to any of claims 2 or 3, **characterized in that** said removable card (104) fulfils at least one electrical connection function between the second terminal parts of the pair of contacts following said first pair on the same row and said second terminal parts of the pair of contacts facing said first pair in the other row.

5. The connector module (100) according to the preceding claim, **characterized in that** said removable card fulfils a high-pass filter function between the second terminal parts of the pair of contacts following said first pair in the same row and said second terminal parts of the pair of contacts facing said first pair in the other row.

6. The connector module (100) according to any of the preceding claims, **characterized in that:**
- the first row comprises 2n pairs of contacts forming n successive groups of 2 pairs of contacts, C₂ᵢ and C₂ᵢ₊₁ on the one hand and C'₂ᵢ and C'₂ᵢ₊₁ on the other hand, with i varying from 0 to n-1, n being an integer greater than or equal to 1,
- the second row comprises at least 2n pairs of contacts forming n successive groups of 2 pairs of contacts, C"₂ᵢ and C"₂ᵢ₊₁ on the one hand and C"'₂ᵢ and C"'₂ᵢ₊₁ on the other hand, the contacts C"₂ᵢ and C"₂ᵢ₊₁ facing the contacts C₂ᵢ and C₂ᵢ₊₁, and the contacts C"'₂ᵢ and C"'₂ᵢ₊₁ facing the contacts C'₂ᵢ and C'₂ᵢ₊₁,
- said card comprises a first face including 2n pairs of connecting elements forming n successive groups of 2 pairs of connecting elements, E₂ᵢ and E₂ᵢ₊₁ on the one hand and E'₂ᵢ and E'₂ᵢ₊₁ on the other hand, with i varying from 0 to n-1, and a second face including n pairs of connecting elements E"₂ᵢ and E"₂ᵢ₊₁, so that when said card will separate said second terminal parts normally in facing contact:
- the connecting elements E₂ᵢ and E₂ᵢ₊₁ respectively make contact with the second terminal parts of the contacts C₂ᵢ and C₂ᵢ₊₁, and the connecting elements E'₂ᵢ and E'₂ᵢ₊₁ respectively make contact with the second terminal parts of the contacts C'₂ᵢ and C'₂ᵢ₊₁,
- the connecting elements E"₂ᵢ and E"₂ᵢ₊₁ respectively make contact with the second terminal parts of the contacts C"₂ᵢ and C"₂ᵢ₊₁,
said connecting elements E₂ᵢ and E₂ᵢ₊₁ being electrically connected to said connecting elements E"₂ᵢ and E"₂ᵢ₊₁ via a low-pass filter located on said card.

7. The connector module (100) according to the preceding claim, **characterized in that** said card comprises 2n fingers cut out from said card forming n successive groups of 2 pairs of fingers, D₂ᵢ and D₂ᵢ₊₁ on the one hand and D'₂ᵢ and D'₂ᵢ₊₁ on the other hand, with i varying from 0 to n-1, said fingers D₂ᵢ and D₂ᵢ₊₁ being metal-coated on each of said first and second faces of said card so as to form said connecting elements E₂ᵢ and E₂ᵢ₊₁ on the one hand and E"₂ᵢ and E"₂ᵢ₊₁ on the other hand, and said fingers D'₂ᵢ and D'₂ᵢ₊₁ being metal-coated only on said first face of said card so as to form said connecting elements E'₂ᵢ and E'₂ᵢ₊₁.

8. The connector module (100) according to any of claims 6 or 7, **characterized in that** said connecting elements E'₂ᵢ and E'₂ᵢ₊₁ are electrically connected to said connecting elements E"₂ᵢ and E"₂ᵢ₊₁.

9. The connector module (100) according to the preceding claim, **characterized in that** said electric coupling is made via a high-pass filter.

10. The connector module (100) according to any of the preceding claims, **characterized in that** at least one pair of contacts is electrically coupled with the pair of facing contacts via a jumper element establishing an electric coupling between the first terminal parts of the facing contacts.

11. The connector module (100) according to any of the preceding claims, **characterized in that** said first terminal parts are adapted for receiving a conductor winding.

12. The connector module according to any of claims 1 to 10, **characterized in that** said first terminal parts comprise a self-stripping slot.

13. A connecting strip, comprising a plurality of connector modules according to any of claims 1 to 12.

14. The connecting strip according to the preceding claim, **characterized in that** it comprises a support integrating said plurality of strips, said support being rotatingly mounted around a rotational axis.

15. The connecting strip (200), comprising a substantially rectangular fastening panel (201) including a first face to which a plurality of connector modules (100) according to claims 3 to 12 is removably fastened, said case of each of said modules comprising on the rear part thereof means for fastening said module to said first face, said modules being arranged in a row along a first direction, in parallel to each other so that said first terminal parts for connecting to a conductor are apparent on one face (202), the so-called front face, of said strip, the fastening panel having a plurality of slots showing said second terminal parts so that said cards (104) can be plugged in by the second face of said panel via said slots.

16. The connecting strip (200) according to the preceding claim, **characterized in that** said fastening panel (201) is mounted rotatingly around a rotational axis (OO') substantially extending along one side of said fastening panel.

17. The connecting strip (200) according to claim 16, **characterized in that** it comprises a fastening block in the shape of a rectangular half-parallelepiped the first rectangular support (204) of which is designed to be mounted on a holding element, such as a wall, and the second rectangular support (206) of which comprises on the longitudinal side thereof rotational holding elements (207) of said fastening panel (201).

## Patentansprüche

1. Anschlussmodul (100), umfassend ein Gehäuse (108), wobei das Gehäuse (108) zwei parallele Reihen (R1, R2) von Kontakten umfasst, die einander von einer Reihe zur anderen gegenüberliegen, wobei das Modul (100) eine abnehmbare Karte (104) umfasst, die eine Funktion des elektrischen Verbindens und tiefpassartigen Filterns von Signalen erfüllt, die von Ausgangsverbindern übertragen werden, wobei die abnehmbare Karte (104) Verbindungselemente auf jeder ihrer Seiten umfasst, wobei die Verbindungselemente die Verbindung zu den Ausgangsverbindern herstellen, wobei das Modul **dadurch gekennzeichnet ist, dass** das Gehäuse (108) ausschließlich die Kontakte enthält, und dass jeder der Kontakte einen ersten Endteil (106) zum Anschließen an einen Leiter, der auf einer Seite des Gehäuses angeordnet ist, und einen zweiten gegenüberliegenden Endteil (107), der auf einer gegenüberliegenden Seite des Gehäuses angeordnet ist und die Ausgangsverbinder bildet, umfasst, wobei zwei aufeinanderfolgende Kontakte derselben Reihe ein Kontaktpaar definieren, wobei sich jeder der zweiten Endteile (107) normalerweise elastisch an dem zweiten gegenüberliegenden Endteil (107) abstützt, wobei die Verbindungselemente der abnehmbaren Karte die Verbindung zwischen den zweiten Endteilen, die einander von einer Reihe zur anderen gegenüberliegen, herstellen, indem sie die normalerweise in Kontakt stehenden zweiten Endteile trennen.

2. Anschlussmodul (100) nach Anspruch 1, **dadurch gekennzeichnet, dass** die ersten und zweiten Kontaktpaare einander gegenüberliegen.

3. Anschlussmodul (100) nach Anspruch 1 oder 2, **dadurch gekennzeichnet, dass** die ersten Endteile zum Anschließen an einen Leiter den vorderen Teil des Gehäuses (108) bilden, und dass die Karte an dem hinteren Teil des Gehäuses (108) zwischen den zweiten Endteilen, die sich normalerweise elastisch abstützen und einander gegenüberliegen, eingesteckt werden kann.

4. Anschlussmodul (100) nach einem der Ansprüche 2 oder 3, **dadurch gekennzeichnet, dass** die abnehmbare Karte (104) mindestens eine elektrische Verbindungsfunktion zwischen den zweiten Endteilen des Kontaktpaars, das dem ersten Paar in derselben Reihe folgt, und den zweiten Endteilen des Kontaktpaars, das dem ersten Paar auf der anderen Reihe gegenüberliegt, erfüllt.

5. Anschlussmodul (100) nach dem vorhergehenden Anspruch, **dadurch gekennzeichnet, dass** die abnehmbare Karte eine Hochpass-Filterfunktion zwischen den zweiten Endteilen des Kontaktpaars, das dem ersten Paar in derselben Reihe folgt, und den zweiten Endteilen des Kontaktpaars, das dem ersten Paar auf der anderen Reihe gegenüberliegt, erfüllt.

6. Anschlussmodul (100) nach einem der vorhergehenden Ansprüche, **dadurch gekennzeichnet, dass:**
- die erste Reihe 2n Kontaktpaare umfasst, die n aufeinanderfolgende Gruppen von 2 Kontaktpaaren, C₂ᵢ und C₂ᵢ₊₁ einerseits und C'₂ᵢ und C'₂ᵢ₊₁ andererseits, bilden, wobei sich i von 0 bis n-1 ändert, wobei n eine Ganzzahl größer oder gleich 1 ist,
- die zweite Reihe mindestens 2n Kontaktpaare umfasst, die n aufeinanderfolgende Gruppen von 2 Kontaktpaaren, C"₂ᵢ und C"₂ᵢ₊₁ einerseits und C"'₂ᵢ und C"'₂ᵢ₊₁ andererseits, bilden, wobei die Kontakte C"₂ᵢ und C"₂ᵢ₊₁ den Kontakten C₂ᵢ und C₂ᵢ₊₁ gegenüberliegen und die Kontakte C"'₂ᵢ und C"'₂ᵢ₊₁ den Kontakten C'₂ᵢ und C'₂ᵢ₊₁ gegenüberliegen,
- die Karte eine erste Seite umfasst, die 2n Paare von Verbindungselementen umfasst, die n aufeinanderfolgende Gruppen von 2 Paaren von Verbindungselementen, E₂ᵢ und E₂ᵢ₊₁ einerseits und E'₂ᵢ und E'₂ᵢ₊₁ andererseits, bilden, wobei i sich von 0 bis n-1 ändert, und eine zweite Seite umfasst, die n Paare von Verbindungselementen E"₂ᵢ und E"₂ᵢ₊₁ umfasst, so dass, wenn die Karte die zweiten Endteile, die normalerweise gegenüberliegend in Kontakt stehen, trennt:
- die Verbindungselemente E₂ᵢ und E₂ᵢ₊₁ jeweils Kontakt mit den zweiten Endteilen der Kontakte C₂ᵢ und C₂ᵢ₊₁ herstellen und die Verbindungselemente E'₂ᵢ und E'₂ᵢ₊₁ jeweils Kontakt mit den zweiten Endteilen der Kontakte C'₂ᵢ und C'₂ᵢ₊₁ herstellen,
- die Verbindungselemente E"₂ᵢ und E"₂ᵢ₊₁ jeweils mit den zweiten Endteilen der Kontakte C"₂ᵢ und C"₂ᵢ₊₁ Kontakt herstellen,
wobei die Verbindungselemente E₂ᵢ und E₂ᵢ₊₁ elektrisch mit den Verbindungselementen E"₂ᵢ und E"₂ᵢ₊₁ über ein Tiefpassfilter gekoppelt sind, das sich auf der Karte befindet.

7. Anschlussmodul (100) nach dem vorhergehenden Anspruch, **dadurch gekennzeichnet, dass** die Karte 2n Finger umfasst, die aus der Karte ausgeschnitten sind und n aufeinanderfolgende Gruppen von 2 Fingerpaaren, D₂ᵢ und D₂ᵢ₊₁ einerseits und D'₂ᵢ und D'₂ᵢ₊₁ andererseits, bilden, wobei sich i von 0 bis n-1 ändert, wobei die Finger D₂ᵢ und D₂ᵢ₊₁ auf jeder der ersten und zweiten Seiten der Karte metallisiert sind, um die Verbindungselemente, E₂ᵢ und E₂ᵢ₊₁ einerseits und E"₂ᵢ und E"₂ᵢ₊₁ andererseits, zu bilden, und die Finger D'₂ᵢ und D'₂ᵢ₊₁ nur auf der ersten Seite der Karte metallisiert sind, um die Verbindungselemente E'₂ᵢ und E'₂ᵢ₊₁ zu bilden.

8. Anschlussmodul (100) nach einem der Ansprüche 6 oder 7, **dadurch gekennzeichnet, dass** die Verbindungselemente E'₂ᵢ und E'₂ᵢ₊₁ elektrisch mit den Verbindungselementen E"₂ᵢ und E"₂ᵢ₊₁ gekoppelt sind.

9. Anschlussmodul (100) nach dem vorhergehenden Anspruch, **dadurch gekennzeichnet, dass** die elektrische Kopplung über ein Hochpassfilter hergestellt wird.

10. Anschlussmodul (100) nach einem der vorhergehenden Ansprüche, **dadurch gekennzeichnet, dass** mindestens ein Kontaktpaar elektrisch mit dem Paar von gegenüberliegenden Kontakten über ein Überbrückungselement gekoppelt ist, das eine elektrische Kopplung zwischen den ersten Endteilen der gegenüberliegenden Kontakte herstellt.

11. Anschlussmodul (100) nach einem der vorhergehenden Ansprüche, **dadurch gekennzeichnet, dass** die ersten Endteile dazu geeignet sind, eine Leiterwicklung aufzunehmen.

12. Anschlussmodul nach einem der Ansprüche 1 bis 10, **dadurch gekennzeichnet, dass** die ersten Endteile einen selbstabisolierenden Schlitz aufweisen.

13. Anschlussleiste, umfassend eine Vielzahl von Anschlussmodulen nach einem der Ansprüche 1 bis 12.

14. Anschlussleiste nach dem vorhergehenden Anspruch, **dadurch gekennzeichnet, dass** sie einen Träger umfasst, der die Vielzahl von Leisten integriert, wobei der Träger um eine Drehachse drehbar angebracht ist.

15. Anschlussleiste (200), umfassend eine im Wesentlichen rechteckige Befestigungsplatte (201), die eine erste Seite umfasst, an der eine Vielzahl von Anschlussmodulen (100) nach Anspruch 3 bis 12 abnehmbar befestigt ist, wobei das Gehäuse jedes der Module auf seinem hinteren Teil Mittel zur Befestigung des Moduls auf der ersten Seite umfasst, wobei die Module reihenweise in einer ersten Richtung parallel zu einander angeordnet sind, so dass die ersten Endteile zum Anschließen an einen Leiter auf einer Seite (202), der so genannten Vorderseite, der Leiste sichtbar sind, wobei die Befestigungsplatte eine Vielzahl von Schlitzen aufweist, durch welche die zweiten Endteile zu sehen sind, so dass die Karten (104) an der zweiten Seite der Platte über die Schlitze einsteckbar sind.

16. Anschlussleiste (200) nach dem vorhergehenden Anspruch, **dadurch gekennzeichnet, dass** die Befestigungsplatte (201) um eine Drehachse (OO') herum, die sich im Wesentlichen an einer Seite der Befestigungsplatte entlang erstreckt, drehbar angebracht ist.

17. Anschlussleiste (200) nach Anspruch 16, **dadurch gekennzeichnet, dass** sie einen Befestigungsblock in Form eines Halbquaders umfasst, dessen erster rechteckiger Träger (204) dazu gedacht ist, um an einem Halteelement angebracht zu werden, wie etwa an einer Wand, und dessen zweiter rechteckiger Träger (206) auf seiner Längsseite drehbare Halteelemente (207) der Befestigungsplatte (201) umfasst.
